# EUROPÄISCHE PATENTSCHRIFT

(11) **EP 1 124 709 B1**
(45) Veröffentlichungstag und Bekanntmachung des Hinweises auf die Patenterteilung: **08.01.2003**
(21) Anmeldenummer: 99957918.8
(22) Anmeldetag: 20.10.1999
(51) Int. Cl.: B60R 1/12

(54) **AUSSENSPIEGEL, INSBESONDERE AUSSENRÜCKBLICKSPIEGEL FÜR KRAFTFAHRZEUGE**
OUTSIDE MIRROR, ESPECIALLY AN EXTERIOR REAR VIEW MIRROR FOR MOTOR VEHICLES
RETROVISEUR EXTERIEUR DESTINE EN PARTICULIER A DES VEHICULES AUTOMOBILES

(30) Priorität: 30.10.1998 DE 19850045
(43) Veröffentlichungstag der Anmeldung: 22.08.2001
(73) Patentinhaber: ROBERT BOSCH GMBH, 70442 Stuttgart (DE)
(72) Erfinder: FALLET, Werner, D-75428 Illingen (DE); SCHENK, Joachim, D-38536 Meinersen-Ohof (DE); KRAMP, Wolfgang, D-71254 Ditzingen (DE); HENNE, Ralf, D-74321 Bietigheim-Bissingen (DE)
(86) Internationale Anmeldenummer: DE9903354
(87) Internationale Veröffentlichungsnummer: WO00026064

(56) Entgegenhaltungen:
- DE-A- 19 736 482

## Beschreibung

Die Erfindung betrifft einen Außenspiegel, insbesondere Außenrückblickspiegel für Kraftfahrzeuge, mit den im Oberbegriff des Anspruchs 1 genannten Merkmalen.

### Stand der Technik

Ein Außenspiegel der gattungsgemäßen Art ist aus DE-A-197 36 482 bekannt. So werden Kraftfahrzeuge mit wenigstens einem Außenspiegel bestückt, der ein in einem Gehäuse angeordnetes Spiegelglas aufweist. Das Gehäuse ist an einem Karosserieteil des Kraftfahrzeugs befestigt. Zur Komforterhöhung ist bekannt, die Außenspiegel mit einer Spiegelelektronik auszurüsten, mittels der beispielsweise eine elektrische Spiegelverstellung, eine Spiegelheizung, eine automatische Spiegelabblendung oder dergleichen realisierbar ist. Diese Spiegelelektronik ist üblicherweise in dem Gehäuse des Außenspiegels integriert, um einen Verkabelungsaufwand zu einem im Kraftfahrzeuginnenraum angeordneten Bedienelement möglichst gering zu halten.

Aus der DE 195 38 770 A1 ist ein Außenrückblickspiegel für Fahrzeuge bekannt, bei dem zusätzlich in den Außenrückblickspiegel eine Blinkleuchte und eine Empfängerelektronik für eine Zentralverriegelung oder eine Wegfahrsperre des Kraftfahrzeugs integriert sind. Hierdurch soll erreicht werden, daß ein Fahrzeugführer, der sich dem Fahrzeug nähert, bereits aus einiger Entfernung die Türverriegelung beziehungsweise die Wegfahrsperre aktivieren beziehungsweise deaktivieren kann.

Ferner ist bekannt, Kraftfahrzeuge mit einer Funkfernsteuerung auszustatten, mittels der beispielsweise eine Steuerung von Garagentorantrieben, Einfahrtsbeleuchtungen, Hoftorsteuerungen oder dergleichen realisierbar ist. Durch eine derartige Funkfernsteuerung kann von einem Fahrzeuginsassen bei Annäherung an eine Einfahrt, Garage oder dergleichen ein Steuersignal gesendet werden, das der Betätigung eines Garagentors, Hoftors oder dergleichen dient. Bekannt ist, die Fernsteuerelektronik in einem Spiegelfuß eines Fahrzeuginnenspiegels oder einem Dachmodul, das beispielsweise weitere Anzeigeeinrichtungen, Bordcomputer oder dergleichen umfaßt, anzuordnen. Hierbei ist nachteilig, daß durch die Anordnung im Fahrzeuginnenraum die Fernsteuerelektronik die Steuersignale durch die Frontscheibe zu einem fahrzeugfernen Empfänger senden muß. Insbesondere wenn die Frontscheibe mit einer Metallisierung versehen ist, die beispielsweise einem Schutz vor Sonneneinstrahlung dient, findet quasi eine Abschirmung der Fernsteuerelektronik statt, so daß deren Wirkungsgrad erheblich beeinträchtigt ist. Bei ungünstiger Einbaulage ist durch die Metallisierung der Fahrzeugwindschutzscheibe sogar der Betrieb einer derartigen Fernsteuerelektronik ausgeschlossen.

Aufgabe der Erfindung ist es, die Schalteinrichtung bei der gattungsgemässen Aussenspiegel zu vereinfachen.

Diese Aufgabe wird durch die Merkmale des Anspruchs 1 gelöst.

Weitere bevorzugte Ausgestaltungen der Erfindung ergeben sich aus den in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Ansicht der Anordnung einer Spiegelelektronik und einer Fernsteuerelektronik in einem Außenspiegel und
- Figur 2: ein Blockschaltbild der Spiegelelektronik und der Fernsteuerelektronik.

### Beschreibung des Ausführungsbeispiels

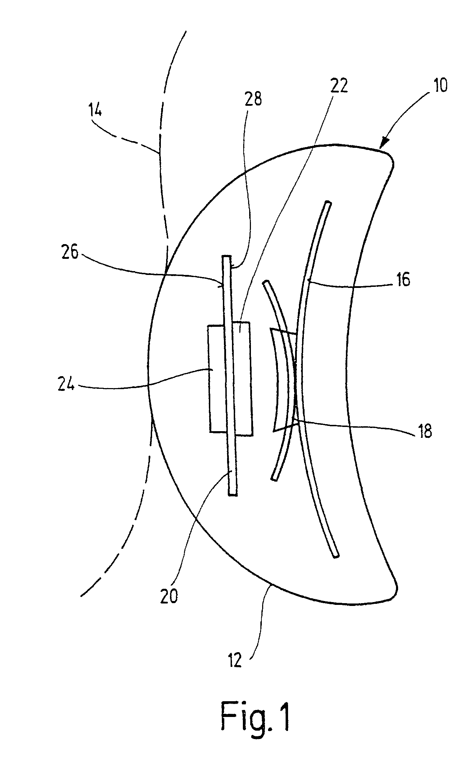

Figur 1 zeigt eine schematische Seitenansicht eines Außenrückblickspiegels 10 eines Kraftfahrzeugs, beispielsweise eines Personenkraftwagens. Der Außenrückblickspiegel 10 umfaßt ein Gehäuse 12, das an einer hier lediglich angedeuteten Karosserie 14, beispielsweise an einer Tür des Kraftfahrzeugs, angebracht ist. Innerhalb des Gehäuses 12 ist ein Spiegelglas 16 angeordnet, das über eine Mechanik 18 verstellbar gelagert ist. Die Mechanik 18 ist mit einem nicht dargestellten Elektroantrieb gekoppelt, mittels dem das Spiegelglas 16 um wenigstens zwei Achsen verschwenkbar ist.

Innerhalb des Gehäuses 12 ist eine Leiterplatte 20 angeordnet, die einerseits eine Spiegelelektronik 22 und andererseits eine Fernsteuerelektronik 24 trägt. Die Spiegelelektronik 22 dient zur Ansteuerung des Spiegelglases 16, während die Fernsteuerelektronik 24 zum Senden von Steuersignalen für kraftfahrzeugferne Empfänger, insbesondere Antriebe von Garagentoren, Hoftoren oder dergleichen dient. Die Fernsteuerelektronik 24 und die Spiegelelektronik 22 sind an gegenüberliegenden Seiten 26 beziehungsweise 28 der Leiterplatte 20 angeordnet. Die Fernsteuerelektronik 24 ist vorzugsweise in der in Fahrtrichtung weisenden Seite 26 und die Spiegelelektronik 22 vorzugsweise in der entgegen der Fahrtrichtung weisenden Seite 28 der Leiterplatte 20 angeordnet. Eine elektrische Kontaktierung der Leiterplatte 20 und somit der Spiegelelektronik 22 und der Fernsteuerelektronik 24 mit einem zentralen Steuergerät oder einer Bedieneinheit des Kraftfahrzeugs erfolgt über eine gemeinsame Verbindungsleitung, die durch das Gehäuse 12 des Spiegels 10 in die Karosserie 14 des Kraftfahrzeugs geführt ist.

Es ist selbstverständlich, daß die Leiterplatte 20 mit der Spiegelelektronik 22 und der Fernsteuerelektronik 24 derart gekapselt angeordnet ist, daß eine Feuchtigkeitseinwirkung ausgeschlossen ist. Dies kann beispielsweise durch Eingießen in eine Vergußmasse, durch Einhausen in ein separates Gehäuse oder dergleichen realisiert werden.

Ein weiterer Vorteil der Anordnung der Spiegelelektronik 22 und der Fernsteuerelektronik 24 an gegenüberliegenden Seiten der Leiterplatte 20 ist, daß eine Kühlfläche von Leistungselementen der Spiegelelektronik 22 gleichzeitig als Abschirmung für einen Hochfrequenzbaustein der Fernsteuerelektronik 24 dienen kann.

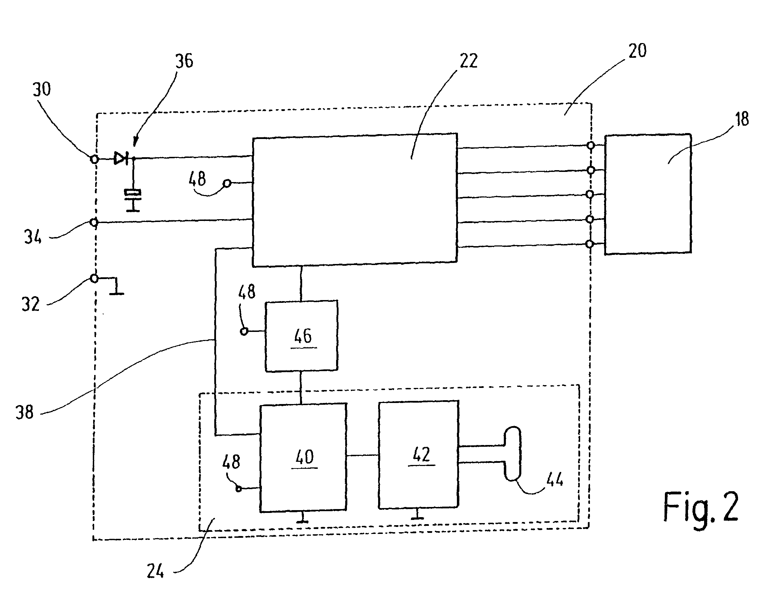

In Figur 2 ist in einem Blockschaltbild die Leiterplatte 20 mit der Spiegelelektronik 22 und der Fernsteuerelektronik 24 gezeigt. Anhand des Blockschaltbildes wird deutlich, daß einige Bauelemente sowohl von der Spiegelelektronik 22 als auch von der Fernsteuerelektronik 24 gemeinsam genutzt werden.

Ein Eingangsanschluß 30 ist mit einer Versorgungsspannungsquelle, ein Eingang 32 mit Masse und ein Eingang 34 der Leiterplatte 20 ist mit einem seriellen Bus verbunden. Das Heranführen der Versorgungsspannung, des seriellen Busses und der Masse an die Leiterplatte 20 erfolgt über eine gemeinsame Zuleitung in das Gehäuse 12 des Spiegels 10. Der Eingang 30 ist über eine Überspannungs- und Verpolschutzschaltung 36 mit der Spiegelelektronik 22 verbunden. Ferner ist der Eingang 34 mit der Spiegelelektronik 22 verbunden. Die Spiegelelektronik 22 verarbeitet die über den seriellen Bus gelieferten Daten, die für eine Ansteuerung des Außenrückblickspiegels 10 beziehungsweise des Spiegelglases 16 bestimmt sind. Entsprechend wird die elektromotorische Mechanik 18 zur Verstellung des Spiegelglases 16, zur Auslösung einer Heizung des Spiegelglases 16, zur automatischen Abblendng des Spiegelglases 16 oder zum Anklappen des Außenrückblickspiegels 10 umgesetzt.

Die für die Fernsteuerelektronik 24 bestimmten Signale werden über eine interne Busleitung 38 von der Spiegelelektronik 22 abgezweigt und der Fernsteuerelektronik 24 zugeführt. Die Fernsteuerelektronik 24 umfaßt einen Codierungsbaustein 40 sowie einen Hochfrequenzmodulationsbaustein 42 und eine Sendeantenne 44. Sowohl die Spiegelelektronik 22 als auch die Fernsteuerelektronik 24 nutzen einen gemeinsamen Taktgenerator 46, der einer Mikroprozessoransteuerung der Spiegelelektronik 22 sowie der Fernsteuerelektronik 24 dient. Über einen gemeinsamen Anschluß 48 wird für die Spiegelelektronik 22, den Taktgenerator 46 sowie die Fernsteuerelektronik 24 ein Bezugspotential bereitgestellt.

Anhand des Blockschaltbildes in Figur 2 wird deutlich, daß eine Reihe von Bauelementen sowohl von der Spiegelelektronik 22 als auch von der Fernsteuerelektronik 24 gemeinsam nutzbar sind. So ist die Anordnung nur eines Überspannungs- und Verpolschutzes sowie einer Spannungsstabilisierung und eines Taktgenerators notwendig. Hiermit ergeben sich gegenüber einem getrennten Aufbau der Spiegelelektronik 22 und der Fernsteuerelektronik 24 Kosteneinsparungen durch die Verwendung von weniger Bauelementen und der Einsparung von Montagezeit. In einem weiteren Ausführungsbeispiel kann vorgesehen sein, daß der Codierungsbaustein 40 bereits von einem Mikroprozessor der Spiegelelektronik 22 übernommen wird, so daß der Aufbau der Fernsteuerelektronik 24 wesentlich vereinfacht ist. Diese braucht dann nur noch den Hochfrequenzmodulationsbaustein 42 sowie die Sendeantenne 44 aufzuweisen.

## Patentansprüche

1. Außenspiegel, insbesondere Außenrückspiegel für Fahrzeuge, mit einem mit einem Karosserieteil verbundenen Gehäuse (12), in dem wenigstens ein Spiegelglas (16) angeordnet ist, wobei der Außenspiegel (10) gleichzeitig eine Fernsteuerelektronik (24) zur Steuerung von fahrzeugfernen Empfängern umfasst, wobei die Fernsteuerelektronik (24) mit einer Spiegelelektronik (22) eines elektrisch betätigbaren Außenspiegels (10) in einem gemeinsamen Gehäuse (12) des Außenspiegels (10) angeordnet ist, **dadurch gekennzeichnet, dass** die Spiegelelektronik (22) und die Fernsteuerelektronik (24) eine gemeinsame Überspannungs- und Verpolschutzschaltung (36) und/oder einen gemeinsamen Taktgenerator (46) nutzen.

2. Außenspiegel nach Anspruch 1, **dadurch gekennzeichnet, daß** die Spiegelelektronik (22) und die Fernsteuerelektronik (24) auf einer gemeinsamen Leiterplatte (20) angeordnet sind.

3. Außenspiegel nach Anspruch 2, **dadurch gekennzeichnet, daß** die Spiegelelektronik (22) und die Fernsteuerelektronik (24) auf gegenüberliegenden Seiten (26, 28) der Leiterplatte (20) angeordnet sind.

4. Außenspiegel nach Anspruch 3, **dadurch gekennzeichnet, daß** die Fernsteuerelektronik (24) auf einer in Fahrtrichtung weisenden Seite (26) der Leiterplatte (20) angeordnet ist.

5. Außenspiegel nach einem der vorhergehenden Ansprüche, **dadurch gekennzeichnet, daß** die Fernsteuerelektronik (24) und die Spiegelelektronik (22) gemeinsame Schaltungsbestandteile aufweisen beziehungsweise nutzen.

6. Außenspiegel nach einem der vorhergehenden Ansprüche, **dadurch gekennzeichnet, daß** eine elektrische Kontaktierung der Spiegelelektronik (22) und der Fernsteuerelektronik (24) mit einem Steuergerät und/oder einer Bedieneinheit des Fahrzeuges über eine gemeinsame Verbindungsleitung erfolgt.

7. Außenspiegel nach Anspruch 6, **dadurch gekennzeichnet, daß** die Verbindungsleitung die Verbindung mit einer Versorgungsspannung, mit Masse und mit einem seriellen Bus des Fahrzeuges realisiert.

## Claims

1. Outside mirror, in particular an outside rear-view mirror for motor vehicles, having a housing (12) which is connected to a body part and in which at least one mirror glass (16) is arranged, the outside mirror (10) simultaneously comprising a remote-control electronic unit (24) for controlling receivers remote from the vehicle, the remote-control electronic unit (24) being arranged with a mirror electronic unit (22) of an electrically operable outside mirror (10) in a common housing (12) of the outside mirror (10), **characterized in that** the mirror electronic unit (22) and the remote-control electronic unit (24) use a common overvoltage and reverse-polarity protection circuit (36) and/or a common clock generator (46).

2. Outside mirror according to Claim 1, **characterized in that** the mirror electronic unit (22) and the remote-control electronic unit (24) are arranged on a common printed circuit board (20).

3. Outside mirror according to Claim 2, **characterized in that** the mirror electronic unit (22) and the remote-control electronic unit (24) are arranged on opposite sides (26, 28) of the printed circuit board (20).

4. Outside mirror according to Claim 3, **characterized in that** the remote-control electronic unit (24) is arranged on a side (26) of the printed circuit board (20) pointing in the driving direction.

5. Outside mirror according to one of the preceding claims, **characterized in that** the remote-control electronic unit (24) and the mirror electronic unit (22) have or use common circuit components.

6. Outside mirror according to one of the preceding claims, **characterized in that** an electrical contact between the mirror electronic unit (22) and the remote-control electronic unit (24) is made with the aid of a control device and/or an operating unit of the vehicle via a common connecting line.

7. Outside mirror according to Claim 6, **characterized in that** the connecting line implements the connection to a supply voltage, to earth and to a serial bus of the vehicle.

## Revendications

1. Miroir extérieur, en particulier rétroviseur extérieur pour des véhicules automobiles, avec un boîtier (12), lié à une partie de carrosserie, dans lequel est placé au moins un miroir de rétroviseur (16), le rétroviseur extérieur (10) comprenant simultanément une électronique de télécommande (24) pour commander des récepteurs à distance du véhicule, l'électronique de télécommande (24) étant placée avec une électronique de rétroviseur (22) d'un rétroviseur extérieur (10) qu'on peut actionner électriquement dans un boîtier (12) commun du rétroviseur extérieur (10),
**caractérisé en ce que**
l'électronique de rétroviseur (22) et l'électronique de télécommande (24) utilisent un circuit (36) de limiteur de tension et de polarisation et/ou un générateur d'impulsions (46) communs.

2. Miroir extérieur selon la revendication 1,
**caractérisé en ce que**
l'électronique de rétroviseur (22) et l'électronique de télécommande (24) sont disposées sur une carte de circuits imprimés (20) commune.

3. Miroir extérieur selon la revendication 2,
**caractérisé en ce que**
l'électronique de rétroviseur (22) et l'électronique de télécommande (24) sont disposées sur des côtés opposés (26, 28) de la carte de circuits imprimés (20).

4. Miroir extérieur selon la revendication 3,
**caractérisé en ce que**
l'électronique de télécommande (24) est disposée sur un côté (26), dirigé dans le sens de la marche, de la carte de circuits imprimés (20).

5. Miroir extérieur selon l'une des revendications précédentes,
**caractérisé en ce que**
l'électronique de télécommande (24) et l'électronique de rétroviseur (22) présentent ou utilisent des composants de circuits communs.

6. Miroir extérieur selon l'une des revendications précédentes,
**caractérisé en ce qu'**
une mise en contact électrique de l'électronique de rétroviseur (22) et de l'électronique de télécommande (24) est réalisée avec un bloc électronique et/ou avec une unité de commande du véhicule au moyen d'une ligne de liaison commune.

7. Miroir extérieur selon la revendication 6,
**caractérisé en ce que**
la ligne de liaison réalise la liaison avec une tension d'alimentation, avec la masse et avec un bus en série du véhicule.
